Europäisches Patentamt

European Patent Office

Office européen des brevets

(19)

(11) Numéro de publication: **0 236 196**
**B1**

(12) # FASCICULE DE BREVET EUROPEEN

(45) Date de publication du fascicule du brevet:
**20.12.89**

(51) Int. Cl.⁴: **B62K 25/04**, B62K 21/00

(21) Numéro de dépôt: **87400309.8**

(22) Date de dépôt: **12.02.87**

(54) **Dispositif de suspension et de commande de direction pour motocycle.**

(30) Priorité: **21.02.86 FR 8602394**
**17.07.86 FR 8610403**

(43) Date de publication de la demande:
**09.09.87 Bulletin 87/37**

(45) Mention de la délivrance du brevet:
**20.12.89 Bulletin 89/51**

(84) Etats contractants désignés:
**AT BE CH DE GB IT LI LU NL SE**

(56) Documents cités:
**FR-A- 2 380 181**
**FR-A- 2 418 141**
**US-A- 4 179 135**
**US-A- 4 526 249**

(73) Titulaire: **ELF FRANCE, Société Anonyme dite:, Tour Elf 2 place de la Coupole La Défense 6, F-92400 Courbevoie(FR)**

(72) Inventeur: **Trema, Daniel, 31 rue du 15 Février, F-95870 Bezons(FR)**

(74) Mandataire: **Hirsch, Marc-Roger, Cabinet Hirsch 34 rue de Bassano, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention s'applique à un dispositif à bras unilatéral de suspension avant, de support et de direction d'une roue et à son dispositif de commande de direction, notamment pour une roue avant de motocycle portée par au moins un bras support relié à son extrémité supérieure à un bloc de suspension et/ou d'amortissement dont la tige mobile extérieure s'articule à son extrémité sur un bec avant du châssis du motocycle, selon le document FR-A 2 594 781.

On a déjà proposé dans ce document de réaliser une suspension avant de motocycle comportant un bras support unique de la roue avant qui est montée en porte à faux sur ce bras et dans laquelle un ressort de suspension est interposé entre un bec avant du châssis du motocycle et le bras support, grâce à l'articulation d'une tige mobile d'un bras de suspension sur ce bec. Ces suspensions de motocycle du type Mac Pherson présentent une difficulté pour assurer la liaison entre le guidon de commande de la direction et le bras de support unique de la roue avant.

Pour assurer la liaison entre le bras support unique et le guidon, on a proposé d'utiliser une transmission à cardan par biellettes qui s'est révélée relativement onéreuse et compliquée à construire, tout en transmettant néanmoins des réactions brutales au guidon au cours du débattement de la suspension. Une autre solution proposée également dans FR-A 2 594 781 consiste à relier, au moins en translation, l'extrémité de la tige mobile au guidon et à relier en rotation par une liaison glissante cette tige au corps du bloc télescopique de suspension, ce corps étant fixé rigidement au bras unique de suspension. Cette solution séduisante en pratique s'avère très difficile à réaliser car il n'existe pas de bloc télescopique de suspension et d'amortissement dont la tige est reliée en rotation au corps du bloc, une telle disposition exigeant qu'un manchon solidaire de la tige entoure le corps du bloc et lui soit relié en rotation par des cannelures, afin de ne pas perturber les étanchéités hydrauliques de l'amortisseur.

Il a par ailleurs été proposé dans US-A 4 179 135 un système de suspension pour roue avant de motocycle, dans lequel une fourche est suspendue par deux bras parallèles dont l'un est en appui sur un ressort de suspension tandis que la tête de fourche est susceptible d'être entraînée en rotation par un jeu de deux biellettes articulées en ciseaux entre elles et reliées par une articulation à cardan, respectivement à un guidon et à la tête de fourche.

La présente invention a notamment pour but de proposer un dispositif à bras unilatéral de suspension et une commande de direction adaptée à cette suspension du type Mac Pherson et qui soit de conception simple, ne transmette pas de réactions parasites au guidon tout en permettant d'utiliser pour le bloc de suspension et d'amortissement des éléments du commerce dont la fiabilité et l'économie d'emploi et d'usage sont bien établies.

A cet effet, le ressort du bloc de suspension et/ou d'amortissement est un ressort hélicoïdal dont au moins l'un des plans d'appui des extrémités comporte une butée à faible frottement autorisant la libre rotation du ressort autour de son axe longitudinal au cours de son débattement et la commande de direction est constituée d'un guidon ou volant monté rotatif sur un axe vertical dudit bec et articulé à rotation autour d'un axe sensiblement perpendiculaire au plan médian de la roue avant, c'est-à-dire au plan de direction, à l'extrémité supérieure d'au moins une biellette haute inclinée vers l'avant du motocycle à partir de son extrémité supérieure et dont l'extrémité inférieure est également articulée à rotation au bras unilatéral ou bras support autour d'un axe sensiblement perpendiculaire audit plan de direction, à l'extrémité supérieure d'au moins une biellette basse inclinée vers l'avant du motocycle à partir de son extrémité inférieure qui est reliée à rotation au bras unilatéral autour d'un axe sensiblement perpendiculaire audit plan de direction, de manière que les biellettes haute et basse reliées en rotation respectivement au guidon et au bras support s'articulent en ciseaux entre elles au cours du débattement de la suspension avant du motocycle.

Selon le mode de réalisation le plus courant, la biellette haute et la biellette basse présentent sensiblement la même longueur et leurs lignes moyennes respectives forment, en position d'extension maximale du bloc de suspension, un angle d'environ 30° avec l'axe longitudinal de ce bloc de suspension.

La biellette haute et la biellette basse peuvent présenter des longueurs nettement différentes et leurs lignes moyennes respectives forment alors, en position d'extension maximale du bloc de suspension, un angle inférieur à 30° avec l'axe longitudinal de ce bloc de suspension. La biellette haute peut aussi présenter une longueur nettement inférieure à celle de la biellette basse de manière à éloigner de la roue avant l'axe d'articulation entre les deux biellettes. L'axe d'articulation de la biellette haute est de préférence sensiblement coaxial à l'axe d'articulation de la tige mobile extérieure du bloc de suspension et d'amortissement sur le bec avant du châssis du motocycle.

Selon un autre mode de réalisation très compact de l'invention, la biellette haute présente, à sa partie supérieure, une fourche à deux branches dont chacune est reliée à rotation à un bossage d'un bras du guidon et respectivement, à sa partie inférieure, un palier central unique qui est traversé par un boulon ou tige d'assemblage et est disposé entre deux paliers qui sont également traversés par le boulon d'assemblage et qui sont ménagés à chacune des extrémités des deux branches d'une fourche de la biellette basse qui se prolonge par deux branches inférieures reliées chacune à rotation à un bossage correspondant ménagé sur le bras support. Les biellettes haute et basse présentent la forme générale d'un trapèze dont la grande base est articulée respectivement au guidon et au bras support de roue avant et dont les petites bases sont accolées l'une à l'autre dans la zone traversée par le boulon d'assemblage et articulées entre elles.

Selon encore un autre mode de réalisation de l'invention la liaison à rotation de l'extrémité supérieure de la bielle haute et celle de l'extrémité inférieure de la biellette basse sont situées au-delà des plans d'appui des extrémités d'un ressort hélicoïdal constituant le ressort de suspension du bloc de suspension. Les biellettes de direction constituent ainsi un moyen supplémentaire de guidage du bloc de suspension au cours de son débattement.

La présente invention s'applique également à un dispositif de commande de direction d'une roue, notamment d'une roue avant de motocycle, comportant un guidon ou volant monté rotatif sur un axe d'un bec de châssis et sur lequel est articulée à rotation autour d'un axe de biellette haut, sensiblement perpendiculaire au plan médian de la roue avant, l'extrémité supérieure d'au moins une biellette haute inclinée vers le bas et dont l'extrémité inférieure est articulée à l'extrémité supérieure d'au moins une biellette basse inclinée vers le haut à partir de son extrémité inférieure qui est articulée à rotation sur un axe de biellette basse solidaire d'au moins un bras support de roue et sensiblement perpendiculaire au plan médian de la roue avant, de manière que les biellettes haute et basse reliées en rotation, respectivement au guidon et au bras support, s'articulent en ciseaux entre elles au cours du débattement de la suspension avant du motocycle.

On a proposé ci-dessus de réaliser une suspension avant de motocycle comportant un bras unique de la roue avant qui est montée en porte à faux sur ce bras et dans laquelle un ressort de suspension est interposé entre un bec avant du châssis du motocycle et le bras support. Les suspensions de motocycle de ce type présentent une difficulté pour assurer la liaison entre le guidon de commande de la direction et le bras de support unique de la roue avant. Pour résoudre cette difficulté, on a proposé ci-dessus de relier le guidon au bras latéral par un jeu de biellettes articulées entre elles en ciseaux pour absorber le débattement de la suspension et transmettre au bras support de roue et à la roue les couples exercés sur le guidon. Cette solution s'est révélée satisfaisante lorsque les axes d'articulation haut et bas des biellettes respectives haute et basse coupent sensiblement l'axe longitudinal du ressort hélicoïdal de suspension. Par contre, lorsqu'il a été envisagé de réduire l'encombrement en hauteur de ce type de suspension à bras support unique en décalant l'axe d'articulation du ressort de suspension par rapport à l'axe d'orientation du bras support, et en décalant de façon similaire l'axe d'articulation bas de la biellette inférieure, par exemple pour loger l'articulation de guidage d'un bras de guidage du bras support de roue, des coincements et des points durs sont apparus dans les articulations des biellettes.

La présente invention a en outre pour but de proposer un dispositif de commande de direction qui soit adapté à ce type plus compact de suspension et de commande de direction et qui soit de conception simple et ne transmette pas de réactions parasites au guidon tout en limitant la zone de débattement des biellettes et le volume du carénage qui l'habille.

A cet effet, l'articulation entre l'extrémité inférieure de la biellette haute et l'extrémité supérieure de la biellette basse est constituée par une articulation à rotule apte à absorber le décentrage relatif des axes de biellettes haut et bas au cours de la rotation du guidon.

Selon un autre mode de réalisation de l'invention, la ligne de centre de l'axe de biellette haut coupe sensiblement l'axe longitudinal du ressort hélicoïdal de suspension correspondant à ladite roue.

Grâce à la disposition des biellettes selon l'invention, l'axe de biellette bas peut être placé du côté opposé au châssis du motocycle, par rapport à l'axe d'orientation du bras support de roue et à l'axe longitudinal du ressort de suspension et l'articulation inférieure d'un ressort hélicoïdal de suspension correspondant à la roue peut être reliée au bras support de roue du côté du châssis du motocycle par rapport à l'axe d'orientation du bras support de roue.

Selon encore un autre mode de réalisation de l'invention, la biellette basse est plus courte que la biellette haute et est susceptible de venir se placer en position sensiblement perpendiculaire à l'axe d'orientation du bras support de roue, pour la position d'écrasement maximal de la suspension de la roue.

L'articulation à rotule est avantageusement constituée, à sa partie haute, d'un carter de réception de sphère fixé à l'extrémité inférieure de la biellette haute et, à sa partie basse, d'une sphère de rotule fixée de façon réglable à l'extrémité supérieure de la biellette basse.

D'autres buts, avantages et caractéristiques apparaîtront à la lecture de la description d'un mode de réalisation de l'invention, faite à titre non limitatif et en regard du dessin annexé où:

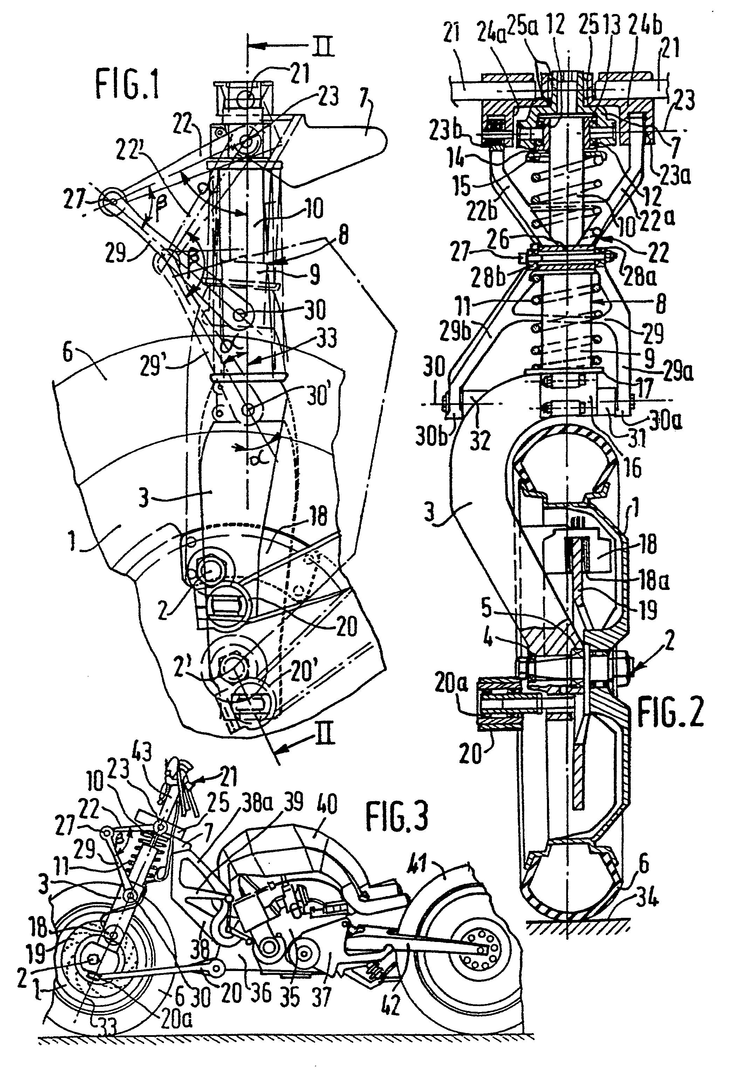

– la figure 1 est une vue de côté du dispositif de suspension et de commande de direction selon l'invention, représenté relié au bras support de roue dans ses deux positions extrêmes d'extension et de compression, la roue du motocycle étant pour la plus grande part arrachée pour diminuer l'encombrement du dessin;

– la figure 2 est une vue en coupe selon le plan II–II de la figure 1, représentant le dispositif de commande de direction vu vers l'avant selon un plan de coupe traversant l'articulation entre les deux biellettes et selon un autre plan de coupe traversant la roue transversalement via son axe et hors de l'étrier de frein à disque;

– la figure 3 est une vue de côté, carénages enlevés, d'un motocycle utilisant un dispositif de suspension et de commande de direction selon l'invention mais légèrement modifié par rapport à celui des figures 1 et 2.

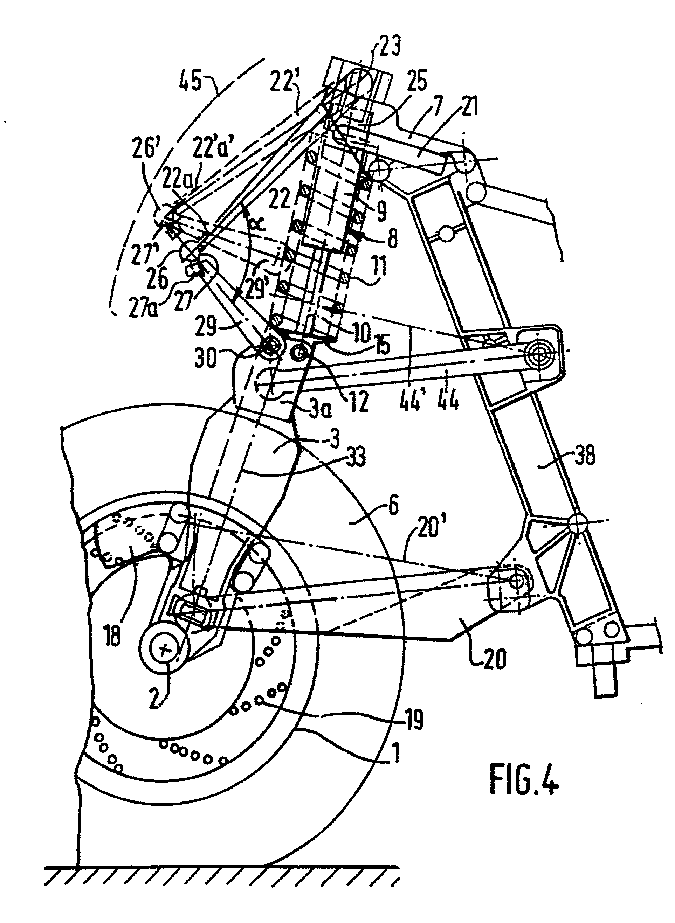

– la figure 4 est une vue schématique de côté d'un autre mode de réalisation du dispositif de commande de direction selon l'invention, représenté relié au bras support de roue dans sa position extrême d'extension, la roue du motocycle étant en partie arrachée pour diminuer l'encombrement du dessin et les biellettes de liaison de direction étant représentées également dans la position de compression maximale.

Si l'on se rapporte aux figures 1 et 2, on voit que la roue avant 1 du motocycle est rendue solidaire d'un arbre de roue 2 qui est porté par un bras support unique 3 par l'intermédiaire de paliers à roulements 4 et 5. Le bras support 3 qui présente transversalement une forme arquée entourant latéralement la partie périphérique de la roue 1 et du bandage pneumatique 6 de cette roue, est relié à un bec avant 7 du châssis du motocycle par l'intermédiaire d'un bloc 8 de suspension et d'amortissement constitué d'un corps d'amortisseur 9 à tige extérieure 10, entouré par un ressort hélicoïdal de suspension 11. La tige extérieure 10 est articulée au bec avant 7 par une articulation à deux paliers à roulements 12 (qui pourraient être remplacés dans une réalisation moins élaborée par une liaison en élastomère du type "silent bloc") autorisant les variations d'inclinaison du bras support 3. La tige 10 est solidaire, à une extrémité et à l'intérieur du cylindre du corps d'amortisseur 9, d'un piston d'amortisseur non représenté et, à son autre extrémité, d'un manchon 13 qui porte les paliers à roulements 12 et sur lequel vient en appui, par l'intermédiaire d'une butée à faible frottement 14 (par exemple à aiguilles) et d'une coupelle 15, l'extrémité supérieure du ressort hélicoïdal de suspension 11. Le corps d'amortisseur 9 est fixé, par serrage à sa partie inférieure, à l'aide d'une bride 16, à la partie supérieure du bras support 3 et est entouré par une coupelle 17 d'appui de l'extrémité inférieure du ressort 11 sur le bras 3, cette coupelle 17 pouvant également comporter une butée à faible frottement. De façon classique, le bras support 3 porte un étrier de frein à disque 18 traversé au niveau des garnitures de friction 18a par un disque de frein 19 solidaire simultanément de la roue 1 et de l'arbre 2 de la roue avant, et ce bras 3 est relié par un bras de guidage bas 20 au bloc moteur du motocycle. Pour des raisons d'esthétique et de protection contre les agressions extérieures, le ressort de suspension 11 peut être logé entièrement à l'intérieur du corps d'amortisseur 9, à la manière du montage classique des fourches télescopiques de motocycle.

La présente invention a notamment pour but de relier un guidon de commande à deux bras 21 au bras support 3, de manière à faire tourner ce bras support 3 en synchronisme avec le guidon 21 quels que soient la position de la tige 10 et l'écrasement du ressort de suspension avant 11 du motocycle. On prévoit pour cela une biellette haute 22 articulée à son extrémité supérieure en 23 par des paliers à roulement 23a et 23b, à des bossages 24a et 24b d'une couronne de réception 25 des tubes droit et gauche du guidon 21. La couronne de réception 25 est articulée à rotation par des paliers à roulement 25a verticalement sur le bec 7. La biellette 22 présente une fourche supérieure à deux branches 22a et 22b et une liaison inférieure à palier unique 26 traversé par un boulon d'assemblage 27 et disposé entre deux paliers 28a, 28b d'une biellette basse 29. La biellette haute 22 est inclinée vers l'avant du motocycle à partir de son extrémité supérieure tandis que la biellette basse 29 est inclinée vers l'avant à partir de son extrémité inférieure à deux branches 29a et 29b, de manière que l'articulation en ciseaux de ces deux biellettes prenne une forme en V pointée vers l'avant du motocycle. La biellette basse 29 est articulée par ses deux branches inférieures 29a et 29b respectivement par des paliers 30a et 30b à des bossages 31 et 32 ménagés sur le bras support 3, sensiblement au niveau de la bride 16.

On a représenté sur la figure 1 en traits mixtes (les éléments déplacés étant affectés de l'indice prime) la position des biellettes 22 et 29 (indiquées 22' et 29') lorsque la suspension de la roue avant du motocycle est détendue au maximum, ce qui correspond à la représentation de la figure 1 et en traits pleins la position de ces biellettes lorsque cette suspension est écrasée au maximum.

On remarque sur la figure 2 que les biellettes haute et basse 22, 29 présentent sensiblement la même longueur et que l'angle α que leurs lignes moyennes respectives forment avec l'axe longitudinal 33 du bloc de suspension 8 en position d'extension maximale de ce bloc de suspension est d'environ 30°, l'angle obtus β du V entre les deux biellettes étant de 120° environ. En position d'écrasement maximum de la suspension de la roue avant, pour laquelle les bielles 22 et 29 sont représentées en traits pleins à la figure 2, l'angle α est voisin de 60°, ce qui est également la valeur de l'angle aigu β entre les deux biellettes. La biellette inférieure 29 comporte à chaque extrémité une fourche à deux branches mais les deux biellettes 22 et 29 présentent toutes les deux la forme générale d'un trapèze dont la grande base est articulée respectivement au guidon 21 (biellette haute 22) et au bras support de roue 3 (biellette basse 29) et dont les petites bases sont accolées l'une à l'autre dans la zone traversée par le boulon d'assemblage 27 et sont articulées entre elles d'une façon permettant de transmettre le couple de rotation du guidon 21 au bras support 3 et à la roue 1.

Les biellettes à deux branches 22 et 29 pourraient être remplacées chacune par deux biellettes séparées articulées l'une à l'autre sur une tige remplaçant le boulon 27.

On remarque que les paliers d'articulation des extrémités respectives supérieure de la biellette 22 et inférieure de la biellette 29 sont situées au-delà des plans d'appui des extrémités respectives du ressort de suspension 11. Ces plans d'appui du ressort 11 sont constitués par le palier à roulement 13 et par la coupelle 17 qui peut également être munie d'une butée à faible frottement. Le guidon à deux bras 21 peut être remplacé par un guidon continu pincé par une bride de serrage en avant ou en arrière de l'axe d'articulation 23 de la biellette haute 22. Cette disposition permet d'adapter le guidon 21 à la morphologie du conducteur du motocycle.

Le fonctionnement du dispositif de commande de direction qui vient d'être explicité en regard des figures 1 et 2 est aisé à imaginer. Lorsque le conducteur du motocycle tourne le guidon 21, les bras 22a et 22b de la biellette haute 22 tournent, entraînés en rotation par les bossages 24a et 24b et font tourner le boulon 27 qui traverse le palier unique 26. Les paliers 28a et 28b de la biellette basse 29 sont entraînés en rotation par le boulon 27 et entraînent également en rotation du même angle la biellette basse 29 et le bras 3 qui positionne l'axe 2 de la roue 1 sensiblement dans la direction commandée par le guidon 21, la légère différence entre la rotation du guidon 21 et celle de la roue 1 étant due principalement à la flexion de torsion des biellettes et à la réaction de la traînée du bandage pneumatique 6 sur son chemin de roulement 34. En cas de débattement de la suspension avant du motocycle par écrasement ou extension du ressort 11, les biellettes 22 et 29 tournent l'une par rapport à l'autre en ciseaux autour de l'articulation constitué par le boulon 27 et de leurs autres articulations d'extrémités 23 et 30 en faisant varier les angles α et β en sens inverse, sans que la transmission du couple entre le guidon 21 et le bras support 3 n'en soit affectée. On remarque également que plus la charge appliquée par le bec avant 7 du chassis sur la roue 1 est importante, notamment en cas de freinage, plus le boulon d'articulation 27 tend à s'éloigner de la roue 1, ce qui facilite le contrôle par le guidon 21 des réactions en provenance de la roue 1, précisément au moment où ces réactions sont maximales du fait du report de la charge sur la roue avant.

La figure 3 illustre une variante de la commande de direction selon l'invention en représentant à plus petite échelle les éléments essentiels de l'ensemble du motocycle. Les pièces et parties identiques à celles des figures 1 et 2 portent les mêmes repères de référence qui ne seront donc pas explicités à nouveau. Parmi les éléments qui n'ont pas encore été explicités, on relève le bloc moteur-transmission 35 et ses plaques supports avant 36 et arrière 37 reliées au châssis avant 38 du motocycle qui porte le bec 7 avec des barres 38a et 39 de raidissement et de liaison au bloc moteur 35, les conduites hautes 40 d'échappement, la roue arrière 41 et son bras de suspension 42 ainsi que l'articulation basse 20a du bras de guidage 20 à la partie inférieure du bras support 3 en-dessous de l'arbre de roue 2 (représentée également en coupe sur la figure 2).

Dans le mode de réalisation de la figure 3, le guidon 21 comporte un tube vertical 43 solidaire de la couronne de réception 25 articulée verticalement à rotation sur le bec 7. Le guidon 21 peut ainsi être placé en position nettement plus haute que l'extrémité supérieure de la bielle 22, ce qui permet d'améliorer la position du pilote du motocycle, en particulier pour les motocycles de tourisme.

Lorsque le motocycle représenté à la figure 3 roule sur son chemin de roulement 34, la rotation du guidon 21 fait tourner le tube 43 et la couronne 25 qui entraîne les biellettes 22 et 29 en rotation par leurs articulations respectives 23, 27 et 30 (voir les figures 1 et 2) et par voie de conséquence, le bras support 3 de la roue 1.

L'écrasement du ressort de suspension 11 fait refermer le V formé entre les biellettes 22 et 29 et réduit l'angle β formé entre ces deux biellettes sans que la liaison de transmission des couples ne soit interrompue entre la couronne 25 articulée à rotation sur le bec 7 du châssis et le bras support 3 de la roue avant 1. On remarque sur la figure 3 que les biellettes 22 et 29 ne détruisent pas l'esthétique générale du motocycle et sont totalement indépendantes du bloc de suspension et d'amortissement 8 qui peut ainsi être choisi de façon à obtenir le meilleur compromis entre les performances de suspension et d'amortissement et les contraintes de disponibilité et de coût.

Selon le mode de réalisation représenté sur la figure 4, la roue avant 1 du motocycle est montée rotative sur un arbre ou fusée de roue 2 qui est porté par un bras support unique 3 par l'intermédiaire de paliers à roulement non représentés. Le bras support 3 qui présente transversalement une forme arquée entourant latéralement la partie périphérique de la roue 1 et du bandage pneumatique 6 de cette roue, est relié à un bec avant 7 du châssis du motocycle par l'intermédiaire d'un bloc 8 de suspension et d'amortissement, constitué d'un corps d'amortisseur 9 à tige extérieure 10, entouré par un ressort hélicoïdal de suspension 11. La tige extérieure 10 dirigée vers le bas est articulée à la partie supérieure 3a du bras 3 par un axe de liaison 12, autorisant les variations relatives d'inclinaison du bras support 3 et de la tige 10. A l'intérieur du cylindre du corps d'amortisseur 9, la tige 10 est solidaire d'un piston d'amortisseur non représenté et elle porte à son extrémité inférieure une coupelle 15 sur laquelle vient en appui l'extrémité inférieure du ressort hélicoïdal de suspension 11. Le corps d'amortisseur 9 est fixé à sa partie supérieure par une articulation adéquate, par exemple à silent-bloc en élastomère, au bec 7 du châssis. De façon classique, le bras support 3 porte au moins un étrier de frein à disque 18 traversé par un disque de frein 19 solidaire simultanément de la roue 1 et de l'arbre 2, et ce bras 3 est relié par un bras de guidage bas 20 et un bras de guidage haut 44 à la poutre avant 38 du châssis du motocycle.

La présente invention a pour but de relier un guidon de commande à deux bras 21 au bras support 3, de manière à faire tourner ce bras support 3 en synchronisme avec le guidon 21 quels que soient la position de la tige 10 et l'écrasement du ressort de suspension avant 11 du motocycle. On prévoit pour cela une biellette haute 22 articulée à son extrémité supérieure en 23 par deux branches, à des supports 25 des tubes droit et gauche du guidon 21 articulé à rotation sur le bec 7. La biellette 22 porte à sa partie inférieure un carter de réception de sphère 26 fixé par des vis 22a. La biellette haute 22 est inclinée vers le bas à partir de son articulation 23 pour être reliée à une biellette basse 29 inclinée vers le haut à partir de son articulation basse 30 à la partie supérieure 3a du bras 3.

Selon l'invention, la liaison entre les biellettes haute et basse 22, 29 est réalisée par une articulation à rotule constituée du carter 26 dans lequel est emprisonné une sphère de rotule 27 fixée par une tige réglable 27a à l'extrémité supérieure de la biellette basse 29. L'articulation 26, 27 autorisant une rotation limitée dans toutes les directions, l'articulation en ciseaux des deux biellettes 22 et 29 prend une forme en V pointée vers l'avant du motocycle. On remarquera que la biellette basse 29 est articulée par ses deux branches inférieures à l'axe 30 qui est placé en avant de l'axe central du bras 3 constituant l'axe d'orientation 33 de la roue avant. L'axe de liaison 12 de la tige de piston 10 sur la partie supérieure 3a du bras 3 est placé sensiblement au niveau de l'axe 30 mais du côté de la poutre avant 38 du châssis du motocycle, par rapport à l'axe d'orientation 33.

On a représenté sur la figure 4 en traits mixtes (les éléments déplacés étant affectés de l'indice prime), la position des biellettes 22 et 29, (indiquée 22 et 29) lorsque la suspension de la roue avant du motocycle est comprimée au maximum, et en traits pleins la position de ces biellettes lorsque cette suspension est détendue au maximum.

On remarque sur la figure 4 que la biellette haute 22 est plus longue que la biellette basse 29 et que celle-ci vient se placer, en position de compression ou d'écrasement maximal de la suspension, au voisinage de la position horizontale, c'est-à-dire perpendiculairement à l'axe 33, c'est à dire dans la position de plus grand bras de levier transmettant le couple maximal au bras 3, précisément au moment ou la charge sur la roue et les couples à vaincre pour orienter la roue sont maximaux. On a fait figurer également en traits mixtes la position d'un carter 45 enveloppant les biellettes 22 et 29 dont la position d'encombrement maximum en largeur correspond au cas où la biellette 29 est sensiblement perpendiculaire à l'axe 33. Le fait que la biellette basse 29 soit plus courte que la biellette haute 22 contribue à réduire l'encombrement du jeu de biellettes et donc celui du carter 45.

Le fonctionnement du dispositif de commande de direction qui vient d'être explicité en regard de la figure 4 est aisé à imaginer. Lorsque le conducteur de motocycle tourne le guidon 21, la biellette haute 22 tourne, entraînée en rotation par les supports 25 et fait tourner la sphère de rotule 27 qui entraîne en rotation la biellette basse 29 et le bras 3 qui positionne l'axe 2 de la roue 1 sensiblement dans la direction commandée par le guidon 21.

En cas de débattement de la suspension avant du motocycle par écrasement ou extension du ressort 11, les biellettes 22 et 29 tournent l'une par rapport à l'autre en ciseaux autour de l'articulation à rotule 26, 27 et de leurs autres articulations d'extrémités 23 et 30 en faisant varier l'angle α entre les deux biellettes, sans que la transmission du couple entre le guidon 21 et le bras support 3 n'en soit affecté.

Du fait de la rotation des bras de guidage 20 et 44, l'inclinaison de l'axe d'orientation 33 varie légèrement au cours du débattement de la suspension. L'axe d'articulation 30 de la biellette basse 29 étant placé en avant de l'axe d'orientation 33, après une rotation importante du bras 3a autour de cet axe 33, l'axe 30 n'est plus rigoureusement parallèle à l'axe 23. Le décalage relatif entre les axes 23 et 30 aboutirait alors à un coincement de l'articulation commune aux biellettes 22 et 29 si cette articulation n'était réalisée par la rotule 26, 27. Une légère flexion des extrémités des biellettes 22 et 29 permet au centre de l'articulation à rotule 26, 27 de se décentrer légèrement par rapport aux axes d'articulation haut et bas 23, 30 en conservant une mobilité parfaite à l'articulation en ciseaux entre les deux biellettes 22 et 29.

**Revendications**

1. Dispositif à bras unilatéral de suspension avant, de support et de direction d'une roue, notamment pour une roue avant de motocycle (1) portée par le bras unilatéral (3) relié à son extrémité supérieure à un bloc de suspension et/ou d'amortissement (8) dont la tige mobile extérieure (10) s'articule à son extrémité sur un bec avant (7) du châssis du motocycle, caractérisé en ce que le ressort du bloc de suspension et/ou d'amortissement (8) est un ressort hélicoïdal (11) dont au moins l'un des plans d'appui des extrémités comporte une butée à faible frottement (14) autorisant la libre rotation du ressort (11) autour de son axe longitudinal (33) au cours de son débattement.

2. Dispositif selon la revendication 1, caractérisé en ce que sa commande de direction est constituée d'un guidon (21) ou volant monté rotatif sur un axe vertical dudit bec avant (7) et articulé à rotation autour d'un axe (23) sensiblement perpendiculaire au plan médian de la roue avant, c'est-à-dire au plan de direction, à l'extrémité supérieure d'au moins une biellette haute (22) inclinée vers l'avant du motocycle à partir de son extrémité supérieure et dont l'extrémité inférieure est également articulée à rotation autour d'un axe (27) sensiblement perpendiculaire audit plan de direction, à l'extrémité supérieure d'au moins une biellette basse (29) inclinée vers l'avant du motocycle à partir de son extrémité inférieure qui est reliée à rotation au bras unilatéral (3) autour d'un axe (30) sensiblement perpendiculaire audit plan de direction, de manière que les biellettes haute et basse (22, 29) reliées en rotation respectivement au guidon (21) et au bras unilatéral (3) s'articulent un ciseaux entre elles au cours du débattement de la suspension avant (8, 11) du motocycle.

3. Dispositif selon la revendication 2, caractérisé en ce que la liaison à rotation (23) de l'extrémité supérieure de la biellette haute (22) et celle (30) de l'extrémité inférieure de la biellette basse (29) sont situées au-delà des plans d'appui (14, 17) des extrémités du ressort hélicoïdal (11) constituant le ressort de suspension du bloc de suspension (8).

4. Dispositif à bras unilatéral de suspension avant, de support et de direction d'une roue selon la revendication 1, notamment pour une roue avant de motocycle (1) portée par au moins un bras support (3) relié à son extrémité supérieure à un bloc de suspension et/ou d'amortissement (8) dont la tige mobile extérieure (10) s'articule à son extrémité sur un bec avant (7) du châssis du motocycle, caractérisé en ce qu'il comporte un guidon (21) ou volant monté rotatif sur un axe vertical dudit bec (7) et articulé à rotation autour d'un axe (23) sensiblement perpendiculaire au plan médian de la roue avant, c'est-à-dire au plan de direction, à l'extrémité supérieure d'au moins une biellette haute (22) inclinée vers l'avant du motocycle à partir de son extrémité supérieure et dont l'extrémité inférieure est également articulée à rotation autour d'un axe (27) sensiblement perpendiculaire audit plan de direction, à l'extrémité supérieure d'au moins une biellette basse (29) inclinée vers l'avant du motocycle à partir de son extrémité inférieure qui est reliée à rotation au bras support (3) autour d'un axe (30) sensiblement perpendiculaire audit plan de direction, de manière que les biellettes haute et basse (22, 29) reliées en rotation respectivement au guidon (21) et au bras support (3) s'articulent en ciseaux entre elles au cours du débattement de la suspension avant (8, 11) du motocycle, et en ce que la liaison à rotation (23) de l'extrémité supérieure de la biellette haute (2) et celle (30) de l'extrémité inférieure de la biellette basse (29) sont situées au-delà des plans d'appui (14, 17) des extrémités du ressort hélicoïdal (11) constituant le ressort de suspension du bloc de suspension (8).

5. Dispositif selon la revendication 4, caractérisé en ce que la biellette haute (22) et la biellette basse (29) présentent sensiblement la même longueur et en ce que leurs lignes moyennes respectives forment, en position d'extension maximale du bloc de suspension, un angle ($\alpha$) d'environ 30° avec l'axe longitudinal (33) de ce bloc de suspension.

6. Dispositif selon la revendication 4, caractérisé en ce que la biellette haute (22) et la biellette basse (29) présentent des longueurs nettement différentes et en ce que leurs lignes moyennes respectives forment, en position d'extension maximale du bloc de suspension (8), un angle ($\alpha$) inférieur à 30° avec l'axe longitudinal (33) de ce bloc de suspension.

7. Dispositif selon la revendication 6, caractérisé en ce que la biellette haute (22) présente une longueur nettement inférieure à celle de la biellette basse (29), de manière à éloigner de la roue avant (1) l'axe d'articulation (27) entre les deux biellettes.

8. Dispositif selon l'une des revendications 4 à 7, caractérisé en ce que l'axe d'articulation (23) de la biellette haute (22) est sensiblement coaxial à l'axe d'articulation de la tige mobile extérieure (10) du bloc de suspension et d'amortissement (8) sur le bec avant (7) du chassis (38) du motocycle.

9. Dispositif selon l'une des revendications 4 ou 8, caractérisé en ce que la biellette haute (22) présente, à sa partie supérieure, une fourche à deux branches (22a, 22b) dont chacune est reliée à rotation à un bossage (24a, 24b) d'un bras du guidon (21) et respectivement, à sa partie inférieure, à un palier central unique (26) qui est traversé par un boulon ou tige d'assemblage (27) et est disposé entre deux paliers (28a, 28b) qui sont également traversés par le boulon d'assemblage et qui sont ménagés à chacune des extrémités des deux branches d'une fourche de la biellette basse (29) qui se prolonge par deux branches inférieures (29a, 29b) reliées chacune à rotation à un bossage correspondant (31, 32) ménagé sur le bras support (3).

10. Dispositif selon l'une des revendications 4 à 9, caractérisé en ce que les biellettes haute et basse (22, 29) présentent la forme générale d'un trapèze dont la grande base est articulée respectivement au guidon (21) et au bras support (3) de roue avant et dont les petites bases sont accolées l'une à l'autre et articulées entre elles.

11. Dispositif selon l'une des revendications 4 à 10, caractérisé en ce que l'un au moins des plans d'appui des extrémités du ressort hélicoïdal (11) comporte une butée à faible frottement (14), autorisant la libre rotation du ressort (11) autour de son axe longitudinal (33) au cours de son débattement.

12. Dispositif de commande de direction d'une roue selon la revendication 1, notamment pour une roue avant (1) de motocycle, comportant un guidon ou volant (21) monté rotatif sur un bec de châssis (7) et sur lequel est articulée à rotation autour d'un axe de biellette haut, sensiblement perpendiculaire au plan médian de la roue avant, l'extrémité supérieure d'au moins une biellette haute (22) inclinée vers le bas et dont l'extrémité inférieure est articulée à l'extrémité supérieure d'au moins une biellette basse (29) inclinée vers le haut à partir de son extrémité inférieure qui est articulée à rotation à un axe de biellette basse (30) solidaire d'au moins un bras support de roue (3) et sensiblement perpendiculaire au plan médian de la roue avant, de manière que les biellettes haute et basse (22, 29) reliées en rotation respectivement au guidon (21) et au bras support (3), s'articulent en ciseaux entre elles au cours du débattement de la suspension avant du motocycle, caractérisé en ce que l'articulation entre l'extrémité inférieure de la biellette haute (22) et l'extrémité supérieure de la biellette basse (29) est constituée par une articulation à rotule (26, 27) apte à absorber le décentrage relatif des axes de biellettes haut (23) et bas (30) au cours de la rotation du guidon (21).

13. Dispositif selon la revendication 12, caractérisé en ce que la ligne de centre de l'axe de biellette haut (23) coupe sensiblement l'axe longitudinal d'un ressort hélicoïdal de suspension (11) correspondant à ladite roue (1).

14. Dispositif selon la revendication 12 ou 13, caractérisé en ce que l'axe de biellette bas (30) est placé du côté opposé au châssis (38) du motocycle, par rapport à l'axe d'orientation (33) du bras support de roue (3).

15. Dispositif selon l'une des revendications 12 à 14, caractérisé en ce que l'articulation inférieure (12) d'un ressort hélicoïdal de suspension (11) correspondant à la roue (1) est reliée au support de roue (3) du côté du châssis (38) du motocycle par rapport à l'axe d'orientation (33) du bras support de roue (3).

16. Dispositif selon l'une des revendications 12 à 15, carctérisé en ce que la biellette basse (29) est plus courte que la biellette haute (22) et est susceptible de venir se placer en position sensiblement perpendiculaire à l'axe d'orientation (33) du bras support de roue (3) pour la position d'écrasement maximale de la suspension correspondant à la roue (1).

17. Dispositif selon l'une des revendications 15 à 16, caractérisé en ce que l'articulation à rotule est constituée, à sa partie haute, d'un carter de réception de sphère (26) fixé à l'extrémité inférieure de la biellette haute (22) et, à sa partie basse, d'une sphère de rotule (27) fixée de façon réglable à l'extrémité supérieure de la biellette basse (22).

## Patentansprüche

1. Vorderradaufhängungsvorrichtung mit einseitig angeordnetem Arm zum Halten und Lenken eines Rades insbesondere für das Vorderrad (1) eines Motorrades, das vom einseitig angeordneten Arm (3) getragen wird, der an seinem oberen Ende mit einem Aufhängungs- bzw. Dämpfungsblock (8) verbunden ist, dessen äussere bewegliche Stange (10) an einem vorderen Schnabel (7) des Motorradrahmens angelenkt ist, dadurch gekennzeichnet, dass die Feder des Aufhängungs- bzw. Dämpfungsblockes (8) als Schraubenfeder (11) ausgebildet ist, wobei wenigstens eine der Abstützflächen der Federenden einen Anschlag (14) geringer Reibung aufweist, der es der Feder (11) gestattet, sich während der Ausschlagbewegungen um ihre Längsachse zu drehen.

2. Vorrichtung nach Anspruch 1, dadurch gekennzeichnet, dass ihre Lenkeinrichtung besteht aus einem Lenker oder Lenkrad (21) der (das) um eine vertikale Achse des vorderen Schnabels (7) drehbar ist, aus mindestens einem oberen Schwingarm (22), der um eine zur Mittenebene des Rades — d.h. zur Lenkebene — normale und an seinem oberen Ende angeordnete Achse (23) schwenkbar ist, der von seinem oberen Ende aus in Fahrtrichtung vorwärts weist und dessen unteres Ende eine ebenfalls zur Lenkebene normale Achse (27) aufweist, und aus mindestens einem unteren Schwingarm (29), dessen oberes Ende an der Achse (27) schwenkbar angelenkt ist, der von seinem unteren Ende aus in Fahrtrichtung vorwärts weist und dessen unteres Ende mittels einer zur Lenkebene normalen Achse (30) schwenkbar am Tragarm (3) angelenkt ist, sodass die mit dem Lenker (21) bzw. Tragarm (3) drehverbundenen oberen und unteren Schwingarme (22, 29) sich beim Einfedern der Aufhängung scherenartig gegeneinander bewegen.

3. Vorrichtung nach Anspruch 2, dadurch gekennzeichnet, dass die Drehverbindung (23) des oberen Endes des oberen Schwingarmes (22) so wie die Drehverbindung (30) des unteren Endes des unteren Schwingarmes (29) jeweils jenseits der Stützebenen (14, 17) der Schraubenfeder (11) angeordnet sind, welche die Aufhängungsfeder des Aufhängungsblockes (8) darstellt.

4. Vorderradaufhängungsvorrichtung mit einseitig angeordnetem Arm zum Halten und Lenken eines Rades nach Anspruch 1, insbesondere für das Vorderrad (1) eines Motorrades, das von wenigstens einem Arm (3) getragen wird, dessen oberes Ende mit einem Aufhängungs- bzw. Dämpfungsblock (8) verbunden ist, dessen äussere bewegliche Stange (10) mit ihrem Ende an einem vorderen Schnabel (7) des Motorradrahmens abgestützt ist, dadurch gekennzeichnet, dass sie einen um eine vertikale Achse des vorderen Schnabels drehbaren Lenker (21) oder ein Lenkrad umfasst, weiters mindestens einen um eine zur Mittenebene des Rades — d.h. zur Lenkebene — normale und an seinem oberen Ende angeordnete Achse (23) schwenkbaren, oberen Schwingarm (22), der von seinem oberen Ende aus in Fahrtrichtung vorwärts weist und dessen unteres Ende eine zur Lenkebene normale Achse (27) aufweist, und schliesslich mindestens einen unteren Schwingarm (29), dessen oberes Ende an der Achse (27) angelenkt ist, der von seinem unteren Ende aus in Fahrtrichtung vorwärts weist und dessen unteres Ende mittels einer zur Lenkebene normalen Achse (30) schwenkbar am Tragarm (3) angelenkt ist, so dass der obere und untere Schwingarm (22, 29), die mit dem Lenker (21) beziehungsweise Tragarm (3) drehverbunden sind, sich während des Einfederns der Aufhängung (8, 11) des Motorrades scherenartig gegeneinander bewegen und weiter dadurch gekennzeichnet, dass die Schwenkachse (23) des oberen Endes des oberen Schwingarmes (22) und die Schwenkachse (30) des unteren Endes des unteren Schwingarmes (29) jenseits der Stützebenen (14, 17) der Enden der Spiralfeder (11), die die Aufhängungsfeder des Aufhängungsblockes (8) bildet, befinden.

5. Vorrichtung nach Anspruch 4, dadurch gekennzeichnet, dass der obere Schwingarm (22) und der untere Schwingarm (29) im wesentlichen gleich lang sind, und dass ihre Mittellinien bei völlig ausgefederter Stellung des Aufhängungsblocks einen Winkel (alpha) von etwa 30° mit der Längsachse (33) des Blocks einschliessen.

6. Vorrichtung nach Anspruch 4, dadurch gekennzeichnet, dass sich die Stangen des oberen Schwingarmes (22) und des unteren Schwingarms (29) erheblich unterscheiden, und dass ihre Mittellinien bei völlig ausgefedertem Aufhängungsblock (8) mit der Längsachse (33) des letzteren einen Winkel (alpha) von weniger als 30° einschliessen.

7. Vorrichtung nach Anspruch 6, dadurch gekennzeichnet, dass der obere Schwingarm (22) wesentlich kürzer als der untere Schwingarm (29) ist, so dass die Schwenkachse (27) zwischen den beiden Schwingarmen von der Achse des Vorderrads (1) weiter entfernt ist.

8. Vorrichtung nach einem der Ansprüche 4 bis 7, dadurch gekennzeichnet, dass die Anlenkachse (23) des oberen Schwingarms (22) im wesentlichen koaxial zur Anlenkachse der äusseren beweglichen Stange (10) des Aufhängungs- und Dämpfungsblocks (8) an den vorderen Schnabel (7) des Motorradrahmens (38) ausgerichtet ist.

9. Vorrichtung nach einem der Ansprüche 4 bis 8, dadurch gekennzeichnet, dass der obere Schwingarm (22) an seinem oberen Ende zweischenklige Gabel (22a, 22b) ausgebildet ist, wobei jeder Schenkel schwenkbar mit einem Ansatzblock (24a, 24b) des Lenkers (21) verbunden ist, und der obere Schwingarm an seinem unteren Ende mit einem einzigen Zentrallager (26) verbunden ist, das von einem Montagebolzen (27) durchsetzt und zwischen zwei ebenfalls von dem Montagebolzen (27) durchsetzten Lagern (28a, 28b) angeordnet ist, und an je einem der Enden der beiden Schenkel einer Gabel des unteren Schwingarms (29) angebracht sind, der in zwei untere Schenkel (29a, 29b) ausläuft, deren jeder schwenkbar mit einem am Arm (3) angeordneten entsprechenden Ansatz (31, 32) verbunden ist.

10. Vorrichtung nach einem der Ansprüche 4 bis 9, dadurch gekennzeichnet, dass der obere Schwingarm und der untere Schwingarm (22, 29) im wesentlichen trapezförmig sind, wobei die langen Grundlinien des Trapezes an die Lenkstange (21) beziehungsweise an den Arm (3) des Vorderrads angelenkt ist, während die kurzen Grundlinien des Trapezes aneinander angeordnet und aneinander angelenkt sind.

11. Vorrichtung nach einem der Ansprüche 4 bis 10, dadurch gekennzeichnet, dass wenigstens eine der Stützebenen der Enden der Schraubenfeder (11) einen Anschlag mit geringer Reibung (14) aufweist, der es der Feder (11) gestattet, sich während ihrer Hubbewegungen frei um ihre Längsachse (3) zu drehen.

12. Vorrichtung zum Lenken eines Rades nach Anspruch 1, insbesondere des Vorderrades (1) eines Motorrades, mit einer (einem) um eine Achse durch den Schnabel (7) des Fahrzeugrahmens drehbar angebrachten Lenker oder Lenkrad (21), an dem das obere Ende wenigstens eines abwärts geneigten oberen Schwingarmes (22) um eine zur Mittelachse des Vorderrads im wesentlichen senkrechte obere Schwingarmachse drehbar angelenkt ist, während sein unteres Ende an das obere Ende wenigstens eines unteren Schwingarms (29) angelenkt ist, der von seinem unteren Ende aus nach oben weist, welches untere Ende an eine untere Schwingarmachse (30) schwenkbar angelenkt ist, die mit wenigstens einem Arm (3) fest verbunden und im wesentlichen senkrecht zur Vorderrad-Mittelebene ist, derart, dass die jeweils mit dem Lenker (21) und mit dem Arm (3) schwenkbar verbundenen Schwingarme (22, 29) während der Ausschlagbewegungen der Vorderradaufhängung scherenartig zusammenwirken, dadurch gekennzeichnet, dass die Schwenkverbindung zwischen dem unteren Ende des oberen Schwingarms (22) und dem oberen Ende des unteren Schwingarms (29) als Kugelgelenk (26, 27) ausgebildet ist, das die während des Drehens der Lenkstange (21) auftretende relative Versetzung der oberen Schwingarmachse (23) und der unteren Schwingarmachse (30) zu kompensieren vermag.

13. Vorrichtung nach Anspruch 12, dadurch gekennzeichnet, dass die Mittellinie der oberen Schwingarmachse (23) die Längsachse der zum Rad gehörigen Aufhängungsschraubenfeder (11) im wesentlichen schneidet.

14. Vorrichtung nach Anspruch 12 oder 13, dadurch gekennzeichnet, dass die untere Schwingarmachse (30) in bezug auf die Längsachse (33) des Arms (3) auf der dem Motorradrahmen (38) gegenüberliegenden Seite angeordnet ist.

15. Vorrichtung nach einem der Ansprüche 12 bis 14, dadurch gekennzeichnet, dass die untere Abstützung (12) der zum Rad (1) gehörenden Aufhängungsschraubenfeder (1) in bezug auf die Längsachse (33) des Armes (3) auf der Seite des Motorradrahmens (38) mit dem Arm (3) verbunden ist.

16. Vorrichtung nach einem der Ansprüche 12 bis 15, dadurch gekennzeichnet, dass der untere Schwingarm (29) kürzer ist als der obere Schwingarm (22) und bei maximalem Ausschlag der Aufhängvorrichtung eine zur Ausrichtungsachse (33) des Arms (3) im wesentlichen senkrechte Lage einnehmen kann.

17. Vorrichtung nach einem der Ansprüche 15 oder 16, dadurch gekennzeichnet, dass die Kugelgelenkverbindung (26, 27) aus einem oberen Teil besteht, der ein Gehäuse für eine Kugel (26) ist, das am unteren Ende des oberen Schwingarmes (22) befestigt ist, und aus einem unteren Teil, der eine einstellbar am oberen Ende des unteren Schwingarmes (29) angeordnete Gelenkkugel (27) ist.

## Claims

1. A front suspension device comprising one lateral arm, for supporting and steering a wheel, especially for a motorcycle front wheel (1) carried by said lateral arm (3) being connected at its upper end to a suspension and/or shock absorber block (8) the external movable rod (10) of which is rotationally connected at its end on a front extension (7) of the chassis of the motorcycle, characterized in that the suspension and/or shock absorber block spring (8) is a helical spring (11) of which at least one of the bearing ends of the ends comprises a low friction abutment (14) authorizing free rotation of the spring (11) about its longitudinal axis during the displacement thereof.

2. A device according to claim 1, characterized in that its steering control means comprise a handlebar (21) or wheel rotatively mounted on a vertical axis of the said front extension (7) and rotationally mounted around an axis (23) substantially perpendicular to the median plane of the front wheel (steering plane), at the upper end of at least one upper link (22) inclined towards the front of the motorcycle from its upper end and of which the lower end is also rotationally mounted about an axis (27) substantially perpendicular to the said steering plane, at the upper end of at least one lower link (29) inclined towards the front of the motorcycle from its lower end which is rotationally connected to a unilateral arm (3) about an axis (30) substantially perpendicular to the said steering plane, so that the upper and lower links (22, 29) connected in rotation respectively to the handlebar (21) and to the unilateral arm (3) are pivotally connected scissor-wise between each other during the displacements of the front wheel suspension (8, 11) of the motorcycle.

3. A device according to claim 2, characterized in that the rotational connection (23) of the upper end of the upper link (22) and that (30) of the lower end of the lower link (29) are located beyond the bearing planes (14, 17) of the ends of said helical spring (11) constituting the suspension spring of the suspension block (8).

4. A front suspension comprising one lateral arm device, for supporting and steering a wheel according to claim 1, especially for a motorcycle front wheel (1) carried by at least one support arm (3) connected to its upper end to a suspension and/or shock absorber block (8) the external movable rod (10) of which is pivotally connected at its end on a front extension (7) of the chassis of the motorcycle, characterized in that it comprises a handlebar (21) or wheel rotary mounted on a vertical axis of the said extension (7) and rotationally mounted around an axis (23) substantially perpendicular to the median plane of the front wheel, i.e. to the steering plane, at the upper end of at least one upper link (22) inclined towards the front of the motorcycle from its upper end and the lower end of which is also pivotally connected in rotation around an axis (27) substantially perpendicular to the said steering plane, at the upper end of at least one lower link (29) inclined towards the front of the motorcycle from its lower end which is rotationally connected to the support arm (3) about an axis (30) substantially perpendicular to said steering plane, such that the upper and lower links (22, 29) connected in rotation respectively to the handlebar (21) and to the support arm (3) are pivotally connected scissor-wise between each other during displacements of the front suspension (8, 11) of the motorcycle and in that the rotational conection (23) of the upper end of the upper link (22) and that (30) of the lower end of the lower link (29) being located beyond the bearing planes, (14, 17) of the ends of the helical spring (11) constituting the suspension spring of the suspension block (8).

5. A device according to claim 4, characterized in that the upper link (22) and the lower link (29) have substantially the same length and their respective median lines form, in the maximum extension position of the suspension block, an angle ($\alpha$) of about 30° with the longitudinal axis (33) of this suspension block.

6. A device according to claim 4, characterized in that the upper link (2) and the lower link (29) having substantially different lengths and their respective median lines form in the position of maximum extension of the suspension block an angle ($\alpha$), smaller than 30° with the longitudinal axis (33) of this suspension block.

7. A device according to claim 6, characterized in that the upper link (22) has a length substantially smaller than that of the lower link (29) so as to increase the distance between the front wheel (1) and the axis of articulation (27) interconnecting said two links.

8. A device according to one of claims 4 to 7, characterized in that the axis of articulation (23) of the upper link (22) is substantially coaxial to the axis of articulation of the external movable (10) of the suspension and shock absorber block (8) on said front extension (7) of the chassis (38) of the motorcycle.

9. A device according to one of claims 4 or 8, characterized in that the upper link (22) has on its upper part, a fork with two legs (22a, 22b) each of which is connected in rotation to a boss (24a, 24b) of a handlebar (21) arm and respectively at the lower part to a single central bearing (26) through which extends an assembling pin (27) and is disposed between two bearings (28a, 28b) that are also crossed through by the assembling pin and which are provided at each of the ends of the two legs of a fork of the lower link (29) which is extended by two lower legs (29a, 29b) each connected in rotation to a corresponding boss (31, 32) provided on the support arm (3).

10. A device according to one of claims 4 to 9, characterized in that the upper and lower links (22, 29) present the general form of a trapezium of which the large base is pivotally connected to the handlebar (21) and to the support arm (3) of the front wheel and of which the small bases are joined together and pivotally connected to each other.

11. A device according to one of claims 4 to 10, characterized in that at least one of the bearing planes of the ends of the helical spring (1) comprises a low friction abutment (14), authorizing the free rotation of the spring (11) about its longitudinal axis (33) during its displacements.

12. A control device for steering a front wheel according to claim 1, especially for a motorcycle front wheel (1) comprising a handlebar or wheel (21) rotatively mounted on a chassis extension (7) and upon which is rotatively mounted on an upper link axle, substantially perpendicular to the median plane of the front wheel, the upper end of at least one downwardly inclined upper link (22) the lower end of which is articulated to the upper end of at least one lower link (29) inclined upwards from its lower end which is rotationally articulated to a lower link axle (30) integral with at least one wheel support arm (3) and substantially perpendicular to the median plane of the front wheel, so that the upper and lower links (22, 29) rotationally connected to the handlebar (21) and to the support arm (3), respectively are articulated in a scissor-like manner between each other during displacement of the front suspension of the motorcycle, characterized in that the articulation between the lower end of the upper link (22) and the upper end of the lower (29) link is constituted by a ball-and-socket articulation (26, 27) adapted to absorb the relative decentering of the upper (23) and lower (30) links during rotation of the handlebar (21).

13. A device according to claim 12, characterized in that the center line of the upper link axle (23) substantially intersects the longitudinal axis of a helical suspension spring (11) associated to the said wheel (1).

14. A device according to claim 12 or 13, characterized in that the lower link axle (30) is placed on the opposite side of the body (38) of the motorcycle, with respect to the orientation axis (33) of the wheel support arm (3).

15. A device according to one of claims 12 to 14, characterized in that lower articulation (12) of said helical suspension spring (11) associated to the wheel (1) is connected to the wheel support (3) at the chassis (38) end of the motorcycle with respect to the orientation axis (33) of the wheel support arm (3).

16. A device according to one of claims 12 to 15, characterized in that the lower link (29) is shorter than the upper link (29) is shorter than the upper link (2) and is adapted to be placed in a position substantially perpendicular to the orientation axis (33) of the wheel support arm (3) under maximum compression conditions of the suspension associated to the wheel (1).

17. A device according to one of claims 15 to 16, characterized in that upper part of the ball-and-socket articulation is constituted by a housing for receiving a spherical ball (26) secured to the lower end of the upper link (22) while its lower part is constituted by a spherical ball (27) adjustably mounted at the upper end of the lower link (22).

EP 0 236 196 B1

FIG.1

FIG.2

FIG.3

FIG.4